# EUROPÄISCHE PATENTSCHRIFT

(11) **EP 2 291 441 B1**
(45) Veröffentlichungstag und Bekanntmachung des Hinweises auf die Patenterteilung: **24.06.2015**
(21) Anmeldenummer: 09707523.8
(22) Anmeldetag: 04.02.2009
(51) Int. Cl.: C08G 18/08, C08G 18/40, C08G 18/83, C08J 3/02, C08J 11/28, C08J 5/00, C08J 11/24, C08L 71/02, C08L 75/02

(54) **POLYHARNSTOFF-NANODISPERSIONSPOLYOLE UND VERFAHREN ZU IHRER HERSTELLUNG**
POLYUREA NANODISPERSION POLYOLS AND METHOD OF THE PRODUCTION THEREOF
POLYOLS COMPRENANT UNE NANODISPERSION DE POLYURÉE ET LEUR PROCÉDÉ DE FABRICATION

(30) Priorität: 05.02.2008 DE 102008008045
(43) Veröffentlichungstag der Anmeldung: 09.03.2011
(73) Patentinhaber: Technische Fachhochschule Wildau, 15745 Wildau (DE)
(72) Erfinder: PESHKOV, Vladimir, 1582 Sofia (BG); HUNGER, Hans-Dieter, 16321 Bernau (DE); BEHRENDT, Gerhard, 23566 Lübeck (DE)
(74) Vertreter: Gulde & Partner
(86) Internationale Anmeldenummer: PCT/EP2009/051261
(87) Internationale Veröffentlichungsnummer: WO 2009/098226

(56) Entgegenhaltungen:
- EP-A- 1 229 071
- GERHARD BEHRENDT, VALENTIN STOYCHEV, DIETER LEHMANN: "Chemisches Recycling von Polyurethan-Blockweichschaumstoffen" TFH WILDAU: WISSENSCHAFTLICHE BEITRÄGE, [Online] 2005, Seiten 85-92, XP002526752 ISSN: 0949-8214 Gefunden im Internet: URL:http://www.tfh-wildau.de/forschung/med ia/wb-tfhw-2005.pdf> [gefunden am 2009-05-06]
- ANONYMUS: "Diethylene glycol (product guide)" PRODUCT DATASHEET (MEGLOBAL), [Online] 2005, Seiten 1-30, XP002526753 Gefunden im Internet: URL:http://www.meglobal.biz/media/product_ guides/MEGlobal_DEG.pdf> [gefunden am 2009-05-06]

## Beschreibung

Diese Erfindung betrifft ein Verfahren zur Herstellung von Oligo- und/oder Polyharnstoff-Nanodispersionen in Polyetheralkoholen. Die Herstellung erfolgt auf der Basis einer Depolymerisationsreaktion von Polyurethan-Polyharnstoffen. Gegenstand der Erfindung sind auch die hergestellten Polyharnstoff-Nanodispersionspolyole und deren Verwendung zum Einsatz in Polyurethansystemen.

Die Herstellung von Polyolen für Polyurethane mit dispergierten Feststoffen ist bekannt und wurde bzw. wird mit verschiedenen Feststoffen durchgeführt: PVC, polymerisierte ethylenisch ungesättigte Verbindungen wie Styrol, Acrylnitril bzw. Polyisocyanatpolyadditionsprodukte. Die auf verschiedenen Wegen hergestellten Polyole werden als Polymerpolyole (in der Regel für diejenigen mit polymerisierten ethylenisch ungesättigten Verbindungen), gepfropfte Polyole ("grafted polyols") oder PIZZA bzw. Ph-Polyolen bezeichnet. PIPA steht für Polyisocyanat-Polyadditions-Polymerpolyole, PHD für Polyharnstoff-Dispersionspolyole.

Die bekannten Polymerpolyole aller Typen werden aus Monomeren in der Regel in einem Polyetheralkohol erzeugt. Ausnahmen sind die Verwendung von Polyesteralkoholen zur Herstellung von Polymerpolyolen, siehe z. B. DE-PS 199 15 125. Die hier den Stand der Technik bestimmenden Polyharnstoffdispersionspolyole werden generell aus Monomeren in einem Polyetheralkohol hergestellt.

PIPA sind Polyadditionsprodukte eines Polyisocyanates mit einer oder mehreren niedermolekularen Verbindung(en) in einem Polyol. Die niedermolekulare Verbindung weist dabei zwei oder mehrere Hydroxyl-, primäre und/oder sekundäre Aminogruppen auf. Die verwendeten Polyole sind in der Regel hochmolekulare Polyetheralkohole. Die PIPA sind demzufolge Dispersionen von teilchenförmigem Material in dem Polyol. Der Anteil der Feststoffe im Polyol liegt zwischen 5 und 40 Gew.-%. Bei der Formulierung kann das PIPA mit weiteren Polyolen verschnitten werden, so dass der Anteil des teilchenförmigen Materials in der Summe der Polyole zwischen 1 und 15 Gew.-% liegt.

Eine Variante der PIPA-Polyole sind die technisch bedeutenden modifizierten Polyole auf Propylenoxidbasis, Polyharnstoffpolyole, die auch als PHD-Polyether bezeichnet werden. PHD-Polyole werden durch in-situ Polyadditionsreaktionen von Isocyanaten mit Aminen oder Aminoalkoholen in einem Basispolyol hergestellt, wie z. B. in der DE 690 26 326 T2 beschrieben. Bei der Herstellung dieser Art von Polyolen reagiert das Isocyanat mit der/den Aminogruppen der Monomere schneller als mit den Hydroxylgruppen des Polyols, d. h. das Isocyanat reagiert vorzugsweise mit dem Amin (oder auch Hydrazin) oder dem Aminoalkohol zur Harnstoffgruppe, wobei das Polyol nur als Reaktionsmedium dient. Die Feststoffkonzentration wird durch die Viskosität des Produkts begrenzt, Feststoffgehalte von 20 bis 40 % können üblicherweise erhalten werden. Die Herstellung und Verwendung der PHD-Polyole wird z. B. auch in der USP 6,784,243 (DE 102 26 931) beschrieben.

Dispersionen von Polyharnstoffteilchen in einem Reaktionsmedium mit gegenüber Isocyanatgruppen reaktiven Wasserstoffatomen können in Polyetheralkoholen unter Verwendung stickstoffhaltiger Verbindungen hergestellt werden; solche Verfahren werden z. B. in den US-Patenten 4,324,716; 4,310,44; 4,310,448; 4,305,857; 4,374,209; 5,292,778 oder 4,305,858 beschrieben.

Die bei dieserart hergestellten Dispersionspolyolen signifikanten Probleme bestehen in einer hohen Viskosität der Polyole sowie in ihrer eingeschränkten Langzeitstabilität bei der Lagerung vor einer Verwendung. Schließlich bestehen auch Probleme bei der Verarbeitung, z. B. höherer Schrumpf der Schaumstoffe, Aufschäumen von Beschichtungen oder kompakten Materialien (siehe dazu z. B. die DE 693 28 032 T2). Es handelt sich bei diesen Polyolen um Dispersionen mit Teilchen, die deutlich sichtbar sind, d. h. der Teilchendurchmesser liegt über 10 µm, in der Regel zwischen 10 und 500 µm. Ziel bei der Herstellung der PIPA ist es jedoch, bei einer nach Möglichkeit hohen Feststoffbeladung des Polyols niedrige Viskositäten und eine hohe Lagerstabilität (d. h. hohe Stabilität der Dispersion zur Vermeidung von Sedimentationen) zu erreichen. Dieses Ziel wird nach dem Stand der Technik z. B. durch eine angepasste Verfahrenstechnik, d. h. durch Umsetzung des Polyisocyanats mit einer oder mehreren niedermolekularen Verbindungen in einem Schnellmischer, erreicht, siehe z. B. US-Patent 4,293,470.

Die bisher bekannten PIPA-Polyole hatten oft Stabilitätsprobleme, speziell bei einem Feststoffgehalt über 25%. Solche Polyole neigen zum Sedimentieren oder Gelieren auf Grund der tixotropen Fähigkeiten der Polyharnstoffe. Es wäre daher wünschenswert, solche Dispersionspolyole mit hohem Füllstoffgehalt und hoher Stabilität zu erhalten.

Die Solvolyse von Polyurethanen mittels Solvolysegemischen aus mindestens einem Glykol und einem sekundären aliphatischen Amin zu Recyclingpolyolen wurde in der DE-PS 199 17 932 beschrieben. Mit diesem Verfahren können in der Regel Dispersionspolyole mit dispergierten Polyharnstoffteilchen der Teilchengröße 100 bis 1500 µm erhalten werden, wobei durch die Größe der Teilchen eine Stabilität oft nicht gegeben ist. Ein kontinuierliches Verfahren zur Herstellung solcher Recyclingpolyole mit einem Durchmesser der Polyharnstoffteilchen von ca. 50 bis 800 µm wird in der DE-OS 103 13 150 beschrieben. Die nach diesen beiden technischen Lehren erhaltenen Produkte sind Polyharnstoffdispersion in den Polyetheralkoholen bzw. Gemischen von Polyetheralkoholen mit Teilchendurchmessern im Mikrometerbereich, die für viele Anwendungen zu groß sind.

In "Chemisches Recycling von Polyurethan-Blockweichschaumstoffen" THF Wildau: Wissenschaftliche Beiträge, 2005, Seiten 85-92, XP002526752 ISSN: 0949-8214 beschreiben Gerhard Behrendt, Valentin Stoychev und Dieter Lehmann die Herstellung von Recycling-Polyolen zur Wiederverwendung in PUR-Weichschaum-Formulierungen und für Polyurethan-Hartschaum-Formulierungen durch Umsetzung verschiedener PUR-Weichschaumstoffe mit Glykolen bzw. Glykolgemischen. Solvolysate können nur in kleinen Anteilen der ursprünglichen Formulierung zugesetzt werden.

Aufgabe der Erfindung ist es, Polyharnstoff-Dispersionspolyole mit hoher Stabilität und kleinen Teilchengrößen im Nanometerbereich bereitzustellen. Die Aufgabe besteht weiterhin darin, ein Verfahren zu finden, das die Depolymerisation von Polyurethanen, in der Regel wassergetriebenen Weichschaumstoffen, gestattet und gleichzeitig die gewünschten Zielverbindungen liefert. Erfindungsgemäß wird die Aufgabe dadurch gelöst, dass Polyurethan-Polyharnstoffe in einem Gemisch aus verschiedenen Diolen und/oder Triolen mit einer speziell eingestellten Oberflächenspannung in Gegenwart ausgewählter Amine bei Temperaturen zwischen 160 und 250°C solvolysiert werden. Sie können dann ohne weitere Aufarbeitung verwendet werden. Die Solvolysegemische bestehen zumindest aus den folgenden Komponenten:
a) einem niedermolekularen Glykol mit einer Oberflächenspannung von 33-34 mN/m, welches ein kurzkettiges Oligopropylenglykol der Molmasse 134 bis 600 ist,
b) einem niedermolekularen Glykol mit einer Oberflächenspannung von 43-44 mN/m, welches ein kurzkettiges Oligoethylenglykol der Molmasse 102 bis 600 ist,
c) hochmolekularem(n) Triol(en) und/oder hochmolekularem(n) Diol(en) mit einer Oberflächenspannung von 32-35 mN/m, welche Copolyetherdiole und/oder Polyethertriole mit statistisch verteilten Ethylenoxidblöcken, mit internen Ethylenoxidblöcken sowie mit Ethylenoxidendblöcken sind, wobei deren Molmasse bei 3000 bis 6000 g/Mol liegt,
d) mindestens einem Polyamin ausgewählt aus Diethylentriamin, Dipropylentriamin, N-Methyl-dipropylentriamin (N,N-Bis(3-aminopropyl)methylamin), N-Methyl-diethylentriamin, Tripropylentetramin oder Triethylentetramin, deren Gemische, ggf. im Gemisch mit einem sekundären Monoamin.

In einem Schritt oder in zwei Schritten werden 10 bis 80 Gew.% Polyurethan-Polyharnstoffe bezogen auf das Gesamtgemisch depolymerisiert.

Die Oberflächenspannung wird üblicherweise als HLB-Wert in wässriger Lösung gemessen. Es gibt auch Messungen der Oberflächenspannung in Substanz (siehe A. K. Rastogi, L. E. St. Pierre, J. Coll. Interface Sc. 31(2), 168, zitiert nach: T. J. Menke, Maßschneidern der Eigenschaften von Polypropen-Mischungen und Olefin-Copolymeren, Dissertation, Universität Halle, 2001), die an Mischungen und Copolymeren von Ethylen- und Propylenoxid gemacht wurden. Danach liegt die Oberflächenspannung von reinem Polyethylenglykol bei ca. 43,5 mN/m und von reinem Polypropylenglykol bei ca. 32,0 mN/m. Die Werte von Mischungen für beide Komponenten verlaufen auf einer Exponentialkurve, die von Copolymeren im wesentlichen auf einer Geraden.

In den erfindungsgemäß verwendeten Gemischen befinden sich bevorzugt sowohl reine Polyethylen- als auch Polypropylenglykole und Copolymere von Ethylen- und Propylenoxid. Daher ist eine sichere Angabe exakter Werte schwierig. Es wurde überraschend festgestellt, dass zur Herstellung von Nanodispersionen von Oligo- bzw. Polyharnstoffen jedoch ganz bestimmte Bereiche der Oberflächenspannung geeignet sind. Diese Bereiche werden durch die Zusammensetzung aus Homo- und Copolymeren bestimmt. Sie müssen auch genau eingehalten werden, da ansonsten eine Agglomerierung der Oligo- und Polyharnstoffe stattfindet, die nicht reversibel ist. Auf Grund dieser Ausführungen und der an sich bekannten Oberflächenspannungen werden erfindungsgemäß als Komponenten
- Oligo- bzw. Polypropylenglykole mit einer Oberflächenspannung vor 33-34 mN/m und einer Molmasse von 1.34-600,
- Oligo- bzw. Polyethylenglykole mit einer Oberflächenspannung von 43-44 mN/m und einer Molmasse von 102-600,
- Copolyetheralkohole aus Ethylenoxid und Propylenoxid mit einer Oberflächenspannung von 32 - 35 mN/m
eingesetzt.

Die erfindungsgemäßen Nanodispersionen weisen demzufolge eine Oberflächenspannung zwischen 32,5 und 36,5 mN/m auf. Der Bereich ist relativ eng, trotzdem noch relativ groß, und liegt
- bei Mischungen von Homopolymeren zwischen 32,6 und 33,5 mN/m,
- bei Copolymeren zwischen 32,5 und 36 mN/m und
- bei Mischungen von Homopolymeren und Copolymeren zwischen 32,5 und 35 mN/m.

Überraschend war, dass nur bei Einhaltung dieser Grenzen sowie ganz bestimmter Kettenlängen der eingesetzten Polyetheralkohole die Bildung von Nanodispersionen erfolgt, während bei anderen Zusammensetzungen der Gemische Mikrodispersionen (d. h. Teilchengröße über 1 µm) gebildet werden, die zwar stabil sind, jedoch ganz andere Eigenschaften der Reaktionsprodukte (vor allem Viskosität) und der daraus hergestellten Polyurethane aufweisen.

Erfindungsgemäße Polyharnstoff-Nanodispersionspolyole bestehen aus
a) einem niedermolekularen Glykol, welches ein Oligopropylenglykol der Molmasse 134-600 mit der Oberflächenspannung von 33-34 mN/m ist,
b) einem niedermolekularen Glykol, welches ein Oligoethylenglykol mit einer Molmasse 102-600 mit der Oberflächenspannung von 43-44 mN/m ist,
c) hochmolekularem(n) Diol(en) und/oder Triol(en) mit der Oberflächenspannung von 32-35 mN/m, welche Copolyetherdiole und/oder Polyethertriole mit statistisch verteilten Ethylenoxidblöcken, mit internen Ethylenoxidblöcken sowie mit Ethylenoxidendblöcken sind, wobei deren Molmasse bei 3000 bis 6000 g/Mol liegt,
d) einem Anteil von 2 bis 30 Gew.-% an Oligo- oder Polyharnstoffen mit Teilchendurchmessern zwischen 20 nm und 1000 nm und
e) ggf. Zusatzstoffen wie Katalysatoren, Stabilisatoren usw. aus dem Polyurethan.

Durch die Einstellung der Solvolysegemischzusammensetzung weisen die Polyharnstoff-Nanodispersionspolyole wesentlich niedrigere Teilchengrößendurchmesser auf als nach den herkömmliche Verfahren hergestellte Polyole. In einer bevorzugten Variante ergeben sich bei Einstellung der Oberflächenspannung allein durch das Gemisch aus einem Di- oder Polyethylenglykol und einem Di- oder Polypropylenglykol Polyharnstoff-Dispersionspolyole, deren Teilchendurchmesser zwischen 20 und 1000 nm liegen.

Bedingt durch die Zusammensetzung der Polyurethane, speziell der Weichschaumstoffe, wird das Solvolysegemisch im Verlauf der Solvolyse ständig in seiner Zusammensetzung verändert, indem die Polyetheralkohole und ggf. Zusatzstoffe freigesetzt werden und damit die Oberflächenspannung des Gemisches verändern. Dieser Effekt hat Einfluss auf die Löslichkeit bzw. das Dispersionsverhalten der Oligo- bzw. Polyharnstoffe, so dass zu einer konstanten Oberflächenspannung während des gesamten Prozesses die Zugabe geeigneter Polyetheralkohole erforderlich sein kann.

Bei den Polyurethan-Weichschaumstoffen unterscheidet man Formschaumstoffe (High Resiliency Foams, HR) und Blockweichschaumstoffe (Slabstock Foams). Während bei den HR-Schaumstoffen in der Regel mit einem Ethylenoxid-Endblock versehene (EO endcapped) Polyetheralkohole zum Einsatz kommen, werden bei den Blockweichschaumstoffen vorzugsweise ethylenoxidfreie Polyethertriole verwendet, die in vielen Fällen jedoch sog. Polymerpolyole sind, d. h. Polyetheralkohole mit darin dispergierten Thermoplasten wie Styren oder Acrylnitril oder deren Copolymere. Schaumstoffen, die unter Verwendung solcher Polymerpolyole hergestellt wurden, sind für das erfindungsgemäße Verfahren ungeeignet, da zwangsläufig immer Dispersionen mit Teilchendurchmessern über 10 µm erhalten würden und die gewünschten Effekte dadurch nicht zu erhalten sind.

Die Polyurethane, die für das erfindungsgemäße Verfahren verwendet werden können, basieren demzufolge auf Polyetheralkoholen ohne Pfropfungen oder anders dispergierte Polymeranteile. Vorzugsweise werden demzufolge Polyurethane wie HR-Foams auf Polyetherbasis, Elastomere auf Polyetherbasis oder polymerpolyolfreie Blockweichschaumstoffe verwendet. Werden solche Polyurethane ohne Füllstoffanteil und die erfindungsgemäßen Solvolysegemische verwendet, werden Polyharnstoff-Dispersionspolyole mit Teilchen im Nanometerbereich bis maximal 1000 nm erhalten. Damit wird die Größe der Polyharnstoffteilchen nur durch die vorgebildeten Strukturelemente des Polyurethans vorgegeben, während durch die erfindungsgemäßen Solvolysegemische die Bildung von Aggregaten vermieden wird bzw. Aggregate der Oligo- oder Polyharnstoffe während der Umsetzung gespalten bzw. zerstört und die dispergierten Teilchen dadurch auf die Größe der Strukturelemente begrenzt werden.

Zur Einstellung der Teilchengröße der Oligo- und/oder Polyharnstoffteilchen in den erfindungsgemäßen Polyharnstoffe-Dispersionspolyolen wird die Reaktionstemperatur während der Umsetzung unterhalb der Schmelzpunkte jedoch oberhalb der Dissoziationstemperatur der Wasserstoffbrückenbindungen der Oligo- bzw. Polyharnstoffe eingestellt. Durch die Wahl einer solchen Temperatur können die Teilchengrößen klein gehalten werden. Erfindungsgemäß liegt die Temperatur bei der Solvolyse zwischen 160 und 250°C und ist von der Art des ursprünglich verwendeten Di- oder Polyisocyanats in den Schaumstoffen abhängig. Bei Verwendung von Toluylendiisocyariat (verschiedene Isomerengemische) liegt die Solvolysetemperatur zwischen 160 und 220°C, bei Verwendung von Methylenbis(x-phenylisocyanat). (MDI), wobei x 2 oder 4 bedeuten kann, sowie bei polymerem MDI (p-MDI) liegt die Solvolysetemperatur vorzugsweise zwischen 165 und 230°C. Bei Verwendung aliphatischer Diisocyanate wie Hexamethylendiisocyanat, Isophorondiisocyanat oder Methylenbis(4-cyclohexyl-isocyanat) wird die Umsetzungstemperatur auf Werte zwischen 170 und 240°C eingestellt, bei araliphatischen Diisocyanaten wie 1,3-Xylylendiisocyanat oder ähnlichen, wird eine Reaktionstemperatur zwischen 180 und 250°C bevorzugt.

Als kurzkettiges Oligopropylenglykol der Molmasse 134 bis 600 wird vorzugsweise Dipropylenglykol verwendet.

Als niedermolekulares Glykol mit einer Oberflächenspannung von 43-44 mN/m wird bevorzugt ein kurzkettiges Oligoethylenglykol der Molmasse 102 bis 600 wird vorzugsweise Diethylenglykol verwendet.

Hochmolekulare Diole und Triole mit einer Oberflächenspannung von 32-35 mN/m sind Copolyetherdiole und/oder Polyethertriole mit statistisch verteilten Ethylenoxidblöcken, mit internen Ethylenoxidblöcken sowie mit Ethylenoxidendblöcken, wobei deren Molmasse bei 3000 bis 6000 g/Mol liegt.

Überraschend wurde gefunden, dass bei Verwendung der speziellen Gemische aus Glykolen bzw. Polyolen definierter Oberflächenspannungen stabile Dispersionen mit einstellbarer Teilchengröße im Nanometerbereich erhalten werden.

Durch Solvolyse von Polyurethan-Weichschaumstoffen werden bei bevorzugten Temperaturen zwischen 160 und 230°C innerhalb von 30 Minuten bis 5 Stunden Polyharnstoff-Dispersionspolyole mit Teilchengrößen zwischen 50 und 1000 nm erhalten. Durch die Einstellung der Oberflächenspannung durch Gemische von ethylenoxidhaltigen und ethylenoxidfreien Polyetheralkoholen im Zusammenwirken mit verfahrenstechnischen Parametern und dem Verhältnis von kurzkettigen und langkettigen Polyetheralkoholen bzw. Diolen kann die Teilchengröße der Oligo- bzw. Polyharnstoffe in den Polyetheralkoholen in bestimmten Bereichen eingestellt werden. Je größer die Teilchen sein sollen, desto niedriger sollte die Oberflächenspannung, desto geringer der Anteil langkettiger Polyetheralkohole sein. Wesentlich ist die Temperatur, bei der die Umsetzung durchgeführt wird: hohe Temperaturen ohne Bezug zum verwendeten Isocyanat führen zu einer Agglomeration der in den Schaumstoffen vorgebildeten Oligomeren bzw. Polymeren. Die auf solche Weise erzeugte Agglomerate können durch die Solvolysebedingungen kaum wieder gespalten werden.

Erfindungsgemäße Polyharnstoff-Dispersionspolyole mit einer Teilchengrößenverteilung der dispergierten Polyharnstoffen zwischen 100 und 1000 nm werden z.B. auch dadurch erhalten, dass 55 bis 75 Teile eines Polyurethan-Formweichschaumstoffs (HR-Foam) in einem Gemisch aus
a) 26 bis 10 Teilen eines kurzkettigen Oligopropylenglykols der Molmasse 134 bis 600,
b) 6 bis 22 Teilen eines kurzkettigen Oligoethylenglykols der Molmasse 102 bis 600,
d) 2 bis 8 Teilen eines geeigneten Amins oder Amingemisches innerhalb von 30 Minuten bis 4 Stunden bei einer Temperatur zwischen 170 und 220°C umgesetzt und in der zweiten Phase der Umsetzung
c) weitere 2 bis 20 Teile eines auf die Zusammensetzung des Polyurethans bezogenen ethylenoxidhaltigen Polyethertriols der Molmasse von 3000 bis 6000 g/Mol zugesetzt werden und das Gemisch wenigstens 15 Minuten bei der Reaktionstemperatur gehalten wird.

Weiterhin können erfindungsgemäß stabile Polyharnstoffe-Dispersionspolyole dadurch erhalten werden, dass 55 bis 75 Teile eines Polyurethan-Weichschaumstoffs in einem Gemisch aus
a) 20 bis 12 Teilen eines kurzkettigen Oligopropylenglykols der Molmasse 134 bis 600,
b) 12 bis 20 Teilen eines kurzkettigen Oligoethylenglykols der Molmasse 102 bis 600,
d) 2 bis 8 Teilen eines geeigneten Amins oder Amingemisches innerhalb von 90 Minuten bis 4 Stunden bei einer Temperatur zwischen 170 und 220°C umgesetzt und in der zweiten Hälfte der Umsetzungsphase
c) mit 1 bis 25 Teilen eines oder mehrerer Polyetheralkohole versetzt
und mit diesen bei der Reaktionstemperatur mindestens 15 Minuten behandelt werden.

Bei dieser Verfahrensweise werden vorzugsweise als Polyurethanen Polyürethah-Blockweichschaumstoffe und als Polyetheralkohole solche mit einem Ethylenoxid-Endblock von 8 bis 20 Gew.-% sowie einer Molmasse von 3000 bis 6000 g/Mol eingesetzt.

Weiterhin können erfindungsgemäß Polyharnstoff-Nanodispersionspolyole mit einer Teilchengrößenverteilung der dispergierten Polyharnstoffe zwischen 100 und 1000 nm dadurch erhalten werden, dass 45 bis 75 Teile eines Polyurethan-Weichschaumstoffs in einem Gemisch aus
a) 20 bis 10 Teilen eines kurzkettigen Oligopropylenglykols der Molmasse 134 bis 600,
b) 1 bis 6 Teilen eines kurzkettigen Oligoethylenglykols der Molmasse 102 bis 600 und
d) 2 bis 8 Teilen eines Amingemisches aus einem aliphatischen Triamin und einem sekundären aliphatischen Amin im Verhältnis 2 : 8 bis 8 : 2
   innerhalb von 90 Minuten bis 4 Stunden bei einer Temperatur zwischen 160 und 200°C umgesetzt werden und im zweiten Schritt mit c) 12 bis 20 Teilen eines trifunktionellen Polyetheralkohols mit ca. 13 % Ethylenoxid und der Molmasse 3000 bis 6000 g/Mol und 4 bis 8 Teilen eines difunktionellen Polypropylenglykols der Molmasse ca. 2000
   versetzt und mindestens 15 Minuten bei der Reaktionstemperatur eingearbeitet werden.

In einer weiteren Ausführungsvariante des Verfahrens werden Nanodiespersionspolyole mit einem Teilchendurchmesser zwischen 50 bis 1000 nm erhalten, indem z.B. 10 bis 80 Teile eines viskoelastischen Polyurethanschaumstoffs in einem Gemisch aus
a) 26 bis 10 Teilen eines kurzkettigen Oligopropylenglykols der Molmasse 134 bis 600,
b) 3 bis 22 Teilen eines kurzkettigen Oligoethylenglykols der Mölmasse 102 bis 600,
d) 2 bis 8 Teilen eines geeigneten Amins oder Amingemisches innerhalb von 30 Minuten bis 4 Stunden bei einer bevorzugten Temperatur zwischen 160 und 220°C umgesetzt und in der zweiten Phase der Umsetzung
c) weitere 2 bis 20 Teile eines auf die Zusammensetzung des Polyurethans bezogenen ethylenoxidfreien Polyethertriols der Molmasse von 3000 bis 6000 g/Mol zugesetzt,
wobei das Gemisch wenigstens 15 Minuten bei der Reaktionstemperatur gehalten wird.

Erfindungsgemäß können eine Vielzahl von Aminen für das Verfahren verwendet werden, die ausgewählt sind aus Diethylentriamin, Dipropylentriamin, N-Methyl-dipropylentriamin (N,N-Bis(3-aminopropyl)methylamin), N-Methyl-diethylentriamin, Tripropylentetramin. Triethylentetramin, deren Gemische oder Gemische der Polyamine mit sekundären aliphatischen Aminen. Sekundäre aliphatische Amine sind z. B. Di-n-butylamin, Diethylamin, Di-n-propylamin, Di-n-hexylamin. Besonders bevorzugt werden im erfindungsgemäßen Verfahren als Polyamin N,N-Bis(3-aminopropyl)methylamin eingesetzt. Als sekundäres Monoamin ist Di-n-butylamin bevorzugt. Ganz besonders bevorzugt findet ein Amingemisch aus 50 bis 80 Gew.-% N,N-Bis(3-aminopropyl)methylamin und 50 bis 20 Gew.-% Di-n-butylamin Verwendung.

Durch die erfindungsgemäße Arbeitsweise werden neuartige Polyharnstoff-Dispersionspolyole durch einen Depolymerisationsvorgang gewonnen, die einerseits optisch klar erscheinen und eine Lagerstabilität von mindestens einem Jahr aufweisen. Innerhalb dieser Zeit ist keine Veränderung der chemisch analysierten Parameter sowie der mittels Lasercounter bestimmten Teilchengrößenverteilung feststellbar. Damit ist ein Weg gefunden worden, mit dessen Hilfe erstmalig Polyharnstoff-Dispersionspolyole mit einer Teilchengröße im Nanometerbereich hergestellt werden.

Ursache für die großen Unterschiede in der Größe der Harnstoffteilchen in den Schaumstoffen sind einerseits die Herstellungsverfahren, zum anderen aber die Fähigkeit der Harnstoffgruppe zur Ausbildung starker Wasserstoffbrückenbindungen (Energieinhalt bis 11,5 Kcal/Mol). Die Ausbildung starker zwischenmolekularer Kräfte fördert einerseits die Agglomeration und in Polymeren, die solche Strukturen enthalten, die Segregation der Strukturelemente und zum anderen in Dispersionen oder bei der Schaumstoffherstellung, da in den Schaumstoffen auf Grund der Treibreaktion mit Wasser zusätzliche Oligoharnstoffe gebildet werden, die Ausbildung großer Überstrukturen im Bereich mehrerer Mikrometer. Diese Polyharnstoffe lassen sich in Form von kleinen Kugeln in PUR-Weichschaumstoffen mittels Elektronenmikroskopie nachweisen.

Die auf dem erfindungsgemäßen Wege hergestellten Dispersionspolyole mit dispergierten nanoskaligen Oligo- oder Polyharnstoffen der Teilchengröße 20 bis 1000 nm werden vorzugsweise für Spezialpolyurethane eingesetzt, z. B. zur Herstellung von Polyolrethan-Beschichtungen, Polyurethan-Folien, Polyurethan-Vergussmassen, Polyurethan-Gelen, halbharten Polyurethanen oder halbharten Polyurethan-Schaumstoffen.

Durch die folgenden Beispiele wird die Erfindung näher erläutert, ohne dabei den Schutzumfang einzuschränken.

### Beispiele

### Beispiel 1

In einen 12,5 1 Edelstahlreaktor mit Rührer, Dosierungen für Flüssigkeiten und Feststoffe, Stickstoffeinleitung und Wärmetauscher werden 1,0 kg Diethylenglykol, 2,2 kg Dipropylenglykol, 0,45 kg N-Methyl-dipropylentriamin und 0,05 kg Di-n-butylamin eingewogen und dieses Gemisch unter Rühren auf 170°C erwärmt. Innerhalb von 95 Minuten werden 6,35 kg Polyurethan-Kaltformschaum in Flocken zugegeben. Nach beendeter Zugabe wird das Gemisch auf 200°C erwärmt. Nach 15 Minuten werden 0,56 kg eines Polyethertriols der Molmasse 4800 g/Mol zugegeben. Die Umsetzung wird nach weiteren 15 Minuten beendet. Das Reaktionsgemisch wird mittels eines Bodenventils abgelassen. Es weist eine Hydroxylzahl von 302 mg KOH/g, eine Aminzahl von 26 mg KOH/g, eine Viskosität von 5170 mPas (25°C) auf und ist über 300 Tage klar. Die Bestimmung der Teilchengröße der Oligoharnstoffe mittels Nanophoxs® ergab das Maximum der Verteilungskurve bei 850 nm.

### Beispiel 2

Wie in Beispiel 1, werden in einen 12,5 1 Edelstahlreaktor mit Rührer, Dosierungen für Flüssigkeiten und Feststoffe, Stickstoffeinleitung und Wärmetauscher werden 1,3 kg Diethylenglykol, 1,9 kg Dipropylenglykol, 0,40 kg N-Methyl-dipropylentriamin und 0,10 kg Di-n-butylamin eingewogen und dieses Gemisch unter Rühren auf 170°C erwärmt. Innerhalb von 75 Minuten werden 6,35 kg Polyurethan-Kaltformschaum in Flocken zugegeben. Nach beendeter Zugabe wird das Gemisch auf 200°C erwärmt. Nach 15 Minuten werden 0,45 kg eines Polyethertriols der Molmasse 4800 g/Mol zugegeben. Die Umsetzung wird nach weiteren 15 Minuten beendet. Das Reaktionsgemisch wird mittels eines Bodenventils abgelassen. Es weist eine Hydroxylzahl von 332 mg KOH/g, eine Aminzahl von 26 mg KOH/g, eine Viskosität von 3900 mPas (25°C) auf und ist über 300 Tage klar. Die Bestimmung der Teilchengröße der Oligoharnstoffe mittels Nanophoxs® ergab das Maximum der Verteilungskurve bei 780 nm.

### Beispiel 3

Wie in Beispiel 1, werden in einen 12,5 1 Edelstahlreaktor mit Rührer, Dosierungen für Flüssigkeiten und Feststoffe, Stickstoffeinleitung und Wärmetauscher werden 1,9 kg Diethylenglykol, 1,3 kg Dipropylenglykol, 0,40 kg N-Methyl-dipropylentriamin und 0,10 kg Di-n-butylamin eingewogen und dieses Gemisch unter Rühren auf 170°C erwärmt. Innerhalb von 65 Minuten werden 6,35 kg Polyurethan-Kaltformschaum in Flocken zugegeben. Nach beendeter Zugabe wird das Gemisch auf 200°C erwärmt. Nach 15 Minuten werden 0,40 kg eines Polyethertriols der Molmasse 4800 g/Mol zugegeben. Die Umsetzung wird nach weiteren 15 Minuten beendet. Das Reaktionsgemisch wird mittels eines Bodenventils abgelassen. Es weist eine Hydroxylzahl von 320 mg KOH/g, eine Aminzahl von 27 mg KOH/g, eine Viskosität von 3250 mPas (25°C) auf und ist über 300 Tage klar. Die Bestimmung der Teilchengröße der Oligoharnstoffe mittels Nanophoxs® ergab das Maximum der Verteilungskurve bei 660 nm.

### Beispiel 4

Wie in Beispiel 1, werden in einen 12,5 1 Edelstahlreaktor mit Rührer, Dosierungen für Flüssigkeiten und Feststoffe, Stickstoffeinleitung und Wärmetauscher werden 0,30 kg Polyethylenglykol 200, 2,9 kg Dipropylenglykol, 0,40 kg N-Methyl-dipropylentriamin und 0,10 kg Di-n-butylamin eingewogen und dieses Gemisch unter Rühren auf 170°C erwärmt. Innerhalb von 120 Minuten werden 6,35 kg Polyurethan-Kaltformschaum in Flocken zugegeben. Nach beendeter Zugabe wird das Gemisch auf 210°C erwärmt. Nach 15 Minuten werden 0,60 kg eines Polyethertriols mit 13 Gew.-% Ethylenoxidendblock der Molmasse 5100 g/Mol zugegeben. Die Umsetzung wird nach weiteren 15 Minuten beendet. Das Reaktionsgemisch wird mittels eines Bodenventils abgelassen. Es weist eine Hydroxylzahl von 284 mg KOH/g, eine Aminzahl von 28 mg KOH/g, eine Viskosität von 4210 mPas (25°C) auf und ist über 300 Tage klar. Die Bestimmung der Teilchengröße der Oligoharnstoffe mittels Nanophoxs® ergab das Maximum der Verteilungskurve bei 430 nm.

### Beispiel 5

Wie in Beispiel 1, werden in einen 12,5 1 Edelstahlreaktor mit Rührer, Dosierungen für Flüssigkeiten und Feststoffe, Stickstoffeinleitung und Wärmetauscher werden 0,6 kg Diethylenglykol, 3,0 kg Dipropylenglykol, 0,35 kg N-Methyl-dipropylentriamin und 0,05 kg Di-n-butylamin eingewogen und dieses Gemisch unter Rühren auf 165°C erwärmt. Innerhalb von 80 Minuten werden 5,5 kg Polyurethan-Kaltformschaum in Flocken zugegeben. Nach beendeter Zugabe wird das Gemisch auf 180°C erwärmt. Nach 15 Minuten werden 1,60 kg eines Polyethertriols mit 12,3 Gew.-% Ethylenoxidendblock der Molmasse 5100 g/Mol zugegeben. Die Umsetzung wird nach weiteren 15 Minuten beendet. Das Reaktionsgemisch wird mittels eines Bodenventils abgelassen. Es weist eine Hydroxylzahl von 292 mg KOH/g, eine Aminzahl von 30 mg KOH/g, eine Viskosität von 1440 mPas (25°C) auf und ist über >300 Tage klar. Die Bestimmung der Teilchengröße der Oligoharnstoffe mittels Nanophoxs® ergab das Maximum der Verteilungskurve bei 200 bis 400 nm.

### Beispiel 6

Wie in Beispiel 1, werden in einen 12,5 1 Edelstahlreaktor mit Rührer, Dosierungen für Flüssigkeiten und Feststoffe, Stickstoffeinleitung und Wärmetauscher werden 1,0 kg Diethylenglykol, 2,2 kg Dipropylenglykol, 0,5 kg N-Methyl-dipropylentriamin und 0,5 kg Di-n-butyl-amin eingewogen und dieses Gemisch unter Rühren auf 160°C erwärmt. Innerhalb von 100 Minuten werden 5,55 kg Polyurethan-Kaltformschaum in Flocken zugegeben. Nach beendeter Zugabe wird das Gemisch auf 200°C erwärmt. Nach 15 Minuten werden 1,25 kg eines Polyethertriols mit 12,3 Gew.-% Ethylenoxidendblock der Molmasse 5100 g/Mol zugegeben. Die Umsetzung wird nach weiteren 15 Minuten beendet. Das Reaktionsgemisch wird mittels eines Bodenventils abgelassen. Es weist eine Hydroxylzahl von 288 mg KOH/g, eine Aminzahl von 29 mg KOH/g, eine Viskosität von 1190 mPas (25°C) auf und ist über >300 Tage klar. Die Bestimmung der Teilchengröße der Oligoharnstoffe mittels Nanophoxs® ergab das Maximum der Verteilungskurve bei 50 bis 400 nm.

### Beispiel 7 (nicht Gegenstand der Erfindung)

Wie in Beispiel 1, werden in einen 12,5 1 Edelstahlreaktor mit Rührer, Dosierungen für Flüssigkeiten und Feststoffe, Stickstoffeinleitung und Wärmetauscher werden 0,48 kg Diethylenglykol, 0,62 kg Dipropylenglykol, 0,5 kg N-Methyl-dipropylentriamin und 0,3 kg Di-n-butyl-amin eingewogen und dieses Gemisch unter Rühren auf 160 bis 170°C erwärmt. Innerhalb von 120 Minuten werden 8,20 kg Polyurethan-Kaitformschaum in Flocken zugegeben. Nach beendeter Zugabe wird das Gemisch auf 200°C erwärmt. Nach 15 Minuten werden 1,15 kg eines Polyethertriols ohne Ethylenoxidendblock der Molmasse 3100 g/Mol zugegeben. Die Umsetzung wird nach weiteren 15 Minuten beendet. Das Reaktionsgemisch wird mittels eines Bodenventils abgelassen. Es weist eine Hydroxylzahl von 308 mg KOH/g, eine Aminzahl von 31 mg KOH/g, eine Viskosität von 1190 mPas (25°C) auf und ist über >300 Tage klar. Die Bestimmung der Teilchengröße der Oligoharnstoffe mittels Nanophoxs® ergab das Maximum der Verteilungskurve bei 210 bis 640 nm.

### Beispiel 8

Wie in Beispiel 1, werden in einen 12,5 1 Edelstahlreaktor mit Rührer, Dosierungen für Flüssigkeiten und Feststoffe, Stickstoffeinleitung und Wärmetauscher werden 0,64 kg Diethylenglykol, 1,2 kg Dipropylenglykol, 0,4 kg N-Methyl-dipropylentriamin und 0,1 kg Di-n-butyl-amin eingewogen und dieses Gemisch unter Rühren auf 170°C erwärmt. Innerhalb von 60 Minuten werden 6,15 kg Polyurethan-Kaltformschaum in Flocken zugegeben. Nach beendeter Zugabe wird das Gemisch auf 200°C erwärmt. Nach 15 Minuten werden 1,60 kg eines Polyethertriols mit 12,3 Gew.-% Ethylenoxidendblock der Molmasse 5100 g/Mol zugegeben. Die Umsetzung wird nach weiteren 15 Minuten beendet. Das Reaktionsgemisch wird mittels eines Bodenventils abgelassen. Es weist eine Hydroxylzahl von 276 mg KOH/g, eine Aminzahl von 25 mg KOH/g, eine Viskosität von 6230 mPas (25°C) auf und ist über >300 Tage klar. Die Bestimmung der Teilchengröße der Oligoharnstoffe mittels Nanophoxs® ergab das Maximum der Verteilungskurve bei 150 bis 550 nm.

### Beispiel 9

Wie in Beispiel 1, werden in einen 12,5 1 Edelstahlreaktor mit Rührer, Dosierungen für Flüssigkeiten und Feststoffen, Stickstoffeinleitung und Wärmetauscher werden 0,4 kg Diethylenglykol, 0,8 kg Dipropylenglykol, 0,35 kg N-Methyl-dipropylentriamin, 0,15 kg Di-n-butylamin und 1,62 kg eines Polyethertriols mit 12,3 Gew.-% Ethylenoxidendblock der Molmasse 5100 eingewogen und dieses Gemisch unter Rühren auf 180°C erwärmt. Innerhalb von 75 Minuten werden 6,45 kg Polyurethan-Kaltformschaum in Flocken zugegeben. Nach beendeter Zugabe wird das Gemisch auf 210°C erwärmt. Die Umsetzung wird nach 30 Minuten beendet. Das Reaktionsgemisch wird mittels eines Bodenventils abgelassen. Es weist eine Hydroxylzahl von 292 mg KOH/g, eine Aminzahl von 26 mg KOH/g, eine Viskosität von 5090 mPas (25°C) auf und ist über >300 Tage klar. Die Bestimmung der Teilchengröße der Oligoharnstoffe mittels Nanophoxs® ergab das Maximum der Verteilungskurve bei 240 bis 670 nm.

### Beispiel 10

In einen 6 1-Glasrealctor mit zentraler Feststoffdosierung, Rückflusskühler, Stickstoffeinleitung und Magnetrührstab, der über einen Magnetrührer in Kombination mit einem elektrischen Heizbad betrieben wird, sowie Temperaturfühler (Pt100) mit elektronischer Steuerung werden 350 g Dipropylenglykol, 350 g Diethylenglykol, 91 g N,N-bis(3-aminopropyl)methylamin und 10 g Di-n-butylamin gegeben. Das Gemisch wird auf 110°C erwärmt. Bei dieser Temperatur werden innerhalb von 103 Minuten 1300 g eines PUR-Kaltformweichschaumstoffs in Form von Flocken von 3 bis 8 cm Größe zugegeben. Während der Zugabe wird ein Stickstoffstrom von 10 1/h aufrecht erhalten. Die Temperatur des Reaktionsgemisches wird langsam auf 210°C erhöht. Nach beendeter Zugabe werden 1960 g eines linearen Copolyetheralkohols auf der Basis Propylenoxid und 27 Gew.-% Ethylenoxid der Molmasse Mn 4000 (Hydroxylzahl 28 mg KOH/g) innerhalb von 25 Minuten zudosiert, so dass die Temperatur des Gemisches nicht unter 190°C sinkt. Danach wird das Reaktionsgemisch noch 20 Minuten bei 210°C nachgerührt. Anschließend wird das Reaktionsgemisch abgefüllt und bei 120°C und 1 mbar 60 Minuten entgast. Es wird in dieser Form weiter verwendet. Die Hydroxylzahl ist 218 mg KOH/g, die Aminzahl 32 mg KOH/g, die Viskosität 1310 mPas (25°C). Die Bestimmung der Teilchengröße der Oligoharnstoffe mittels Nanophoxs® ergab das Maximum der Verteilungskurve bei 170 nm.

### Beispiel 11

In einen 15 1 Edelstahlreaktor mit Rührer, Dosierungen für Flüssigkeiten und Feststoffe, Stickstoffeinleitung und Wärmetauscher werden 1,0 kg Diethylenglykol, 1,2 kg Dipropylenglykol, 0,12 kg N-Methyl-dipropylentriamin und 0,05 kg Di-n-butylamin eingewogen und dieses Gemisch unter Rühren auf 170°C erwärmt. Innerhalb von 95 Minuten werden 5,95 kg Palyurethan-Kaltformschaum in Flocken von 3 - 5 cm Größe zugegeben. Nach beendeter Zugabe wird das Gemisch auf 200°C erwärmt. Nach 15 Minuten werden 5,6 kg eines Copolyetherdiols mit 24 Gew.-% Ethylenoxidendblöcken der Molmasse 3800 g/Mol (Hydroxylzahl 30,0 mg KOH/g) zugegeben. Die Umsetzung wird nach weiteren 15 Minuten beendet. Das Reaktionsgemisch wird mittels eines Bodenventils abgelassen. Es weist eine Hydroxylzahl von 236 mg KOH/g, eine Aminzahl von 23 mg KOH/g, eine Viskosität von 2130 mPas (25°C) auf und ist über 300 Tage klar. Die Bestimmung der Teilchengröße der Oligoharnstoffe mittels Nanophoxs® ergab das Maximum der Verteilungskurve bei 150 nm.

### Beispiel 12

In einen 6 1-Glasreaktor mit zentraler Feststoffdosierung, Rückflusskühler, Stickstoffeinleitung und Magnetrührstab, der über einen Magnetrührer in Kombination mit einem elektrischen Heizbad betrieben wird, sowie Temperaturfühler (Pt100) mit elektronischer Steuerung werden 350 g Dipropylenglykol, 350 g Diethylenglykol, 91g N,N-bis(3-aminopropyl)methylamin und 11 g Di-n-butylamin gegeben. Das Gemisch wird auf 170°C erwärmt. Bei dieser Temperatur werden innerhalb von 103 Minuten 1300 g eines PUR-Kaltformweichschaumstoffs in Form von Flocken von 3 bis 8 cm Größe zugegeben. Während der Zugabe wird ein Stickstoffstrom von 10 1/h aufrecht erhalten. Die Temperatur des Reaktionsgemisches wird langsam auf 210°C erhöht. Nach beendeter Zugabe werden 1960 g eines linearen Copolyetheralkohols auf der Basis Propylenoxid und 27 Gew.-% Ethylenoxid der Molmasse Mn 4000 (Hydroxylzahl 28 mg KOH/g) 850 g eines Copolyethertriols mit 22 % Ethylenoxidendblöcken der Molmasse Mn 6500 (Hydroxylzahl 26 mg KOH/g) innerhalb von 30 Minuten zudosiert, so dass die Temperatur des Gemisches nicht unter 180°C sinkt. Danach wird das Reaktionsgemisch noch 15 Minuten bei 210°C nachgerührt. Anschließend wird das Reaktionsgemisch abgefüllt und bei 120°C und 1 mbar 60 Minuten entgast. Es wird in dieser Form weiter verwendet. Die Hydroxylzahl ist 185 mg KOH/g, die Aminzahl 31 mg KOH/g, die Viskosität 1310 mPas (25°C). Die Bestimmung der Teilchengröße der Oligoharnstoffe mittels Nanophoxs® ergab das Maximum der Verteilungskurve bei 125 nm.

### Beispiel 13

In einen 6 1-Glasreaktor mit zentraler Feststoffdosierung, Rückflusskühler, Stickstoffeinleitung und Magnetrührstab, der über einen Magnetrührer in Kombination mit einem elektrischen Heizbad betrieben wird, sowie Temperaturfühler (Pt100) mit elektronischer Steuerung werden 350 g Dipropylenglykol, 350 g Diethylenglykol, 91g N,N-bis(3-aminopropyl)methylamin und 11 g Di-n-butylamin gegeben. Das Gemisch wird auf 170°C erwärmt. Zu dem Gemisch werden 550 g des linearen Copolyethers von Bespiel 20 gegeben Bei dieser Temperatur werden innerhalb von 130 Minuten 1350 g eines PUR-Kaltformweichschaumstoffs in Form von Flocken von 3 cm Größe zugegeben. Während der Zugabe wird ein Stickstoffstrom von 10 1/h aufrecht erhalten. Die Temperatur des Reaktionsgemisches wird langsam auf 200°C erhöht. Nach beendeter Zugabe werden weitere 750 g eines linearen Copolyetheralkohols auf der Basis Propylenoxid und 27 Gew.-% Ethylenoxid der Molmasse Mn 4000 (Hydroxylzahl 28 mg KOH/g) innerhalb von 25 Minuten zudosiert, so dass die Temperatur des Gemisches nicht unter 190°C sinkt. Danach wird das Reaktionsgemisch noch 30 Minuten bei 200°C nachgerührt. Anschließend wird das Reaktionsgemisch abgefüllt und bei 120°C und 1 mbar 60 Minuten entgast. Es wird in dieser Form weiter verwendet. Die Hydroxylzahl ist 207 mg KOH/g, die Aminzahl 31 mg KOH/g, die Viskosität 1340 mPas (25°C). Die Bestimmung der Teilchengröße der Oligoharnstoffe mittels Nanophoxs® ergab das Maximum der Verteilungskurve bei 118 nm.

### Beispiel 14

In einen 6 1-Glasreaktor mit zentraler Feststoffdosierung, Rückflusskühler, Stickstoffeinleitung und Magnetrührstab, der über einen Magnetrührer in Kombination mit einem elektrischen Heizbad betrieben wird, sowie Temperaturfühler (Pt100) mit elektronischer Steuerung werden 250 g Dipropylenglykol, 250 g Diethylenglykol, 91 g N,N-bis(3-aminopropyl)methylamin und 8 g Di-n-butylamin gegeben. Das Gemisch wird auf 170°C erwärmt. Zu dem Gemisch werden 500 g des linearen Copolyethers von Bespiel 20 gegeben Bei dieser Temperatur werden innerhalb von 130 Minuten 800 g eines PUR-Kaltformweichschaumstoffs in Form von Flocken von 3 cm Größe zugegeben. Während der Zugabe wird ein Stickstoffstrom von 10 1/h aufrecht erhalten. Die Temperatur des Reaktionsgemisches wird langsam auf 200°C erhöht. Nach beendeter Zugabe werden weitere 800 g des gleichen linearen Copolyetheralkohols auf der Basis Propylenoxid und 27 Gew.-% Ethylenoxid der Molmasse Mn 4000 (Hydroxylzahl 28 mg KOH/g) innerhalb von 30 Minuten zudosiert, so dass die Temperatur des Gemisches nicht unter 200°C sinkt. Danach wird das Reaktionsgemisch noch 30 Minuten bei 200°C nachgerührt. Anschließend wird das Reaktionsgemisch abgefüllt und bei 120°C und 1 mbar 60 Minuten entgast. Es wird in dieser Form weiter verwendet. Die Hydroxylzahl ist 194 mg KOH/g, die Aminzahl 32 mg KOH/g, die Viskosität 1370 mPas (25°C). Die Bestimmung der Teilchengröße der Oligoharnstoffe mittels Nanophoxs® ergab das Maximum der Verteilungskurve bei 109 nm.

## Patentansprüche

1. Verfahren zur Herstellung von Polyharnstoff-Nanodispersionspolyolen durch Depolymerisation von Polyurethanen, **dadurch gekennzeichnet, dass** Polyurethan-Polyharnstoffe in einem Gemisch aus Diolen und/oder Triolen in Gegenwart von Aminen bei Temperaturen von 160 bis 250°C solvolysiert werden, wobei 10 bis 80 Gew.-% Polyurethan-Polyharnstoffe bezogen auf das Gesamtgemisch in einem Schritt oder in zwei Schritten in einem Gemisch aus
a) niedermolekularem Glykol mit einer Oberflächenspannung von 33-34 mN/m, welches ein kurzkettiges Oligopropylenglykol der Molmasse 134 bis 600 ist,
b) niedermolekularem Glykol mit einer Oberflächenspannung von 43-44 mN/m, welches ein kurzkettiges Oligoethylenglykol der Molmasse 102 bis 600 ist,
c) hochmolekularem Diol und/oder hochmolekularem Triol mit einer Oberflächenspannung von 32-35 mN/m, welche Copolyetherdiole und/oder Polyethertriole mit statistisch verteilten Ethylenoxidblöcken, mit internen Ethylenoxidblöcken sowie mit Ethylenoxidendblöcken sind, wobei deren Molmasse bei 3000 bis 6000 g/Mol liegt,
d) Polyamin ausgewählt aus Diethylentriamin, Dipropylentriamin, N-Methyl-dipropylentriamin (N,N-Bis(3-aminopropyl)methylamin), N-Methyl-diethylentriamin, Tripropylentetramin oder Triethylentetramin, deren Gemische oder im Gemisch mit einem sekundären Monoamin
depolymerisiert werden.

2. Verfahren nach Anspruch 1, **dadurch gekennzeichnet, dass** das kurzkettige Oligopropylenglykol der Molmasse 134 bis 600 Dipropylenglykol ist.

3. Verfahren nach einem der Ansprüche 1 oder 2,
**dadurch gekennzeichnet, dass** das kurzkettige Oligoethylenglykol der Molmasse 102 bis 600 Diethylenglykol ist.

4. Verfahren nach einem der Ansprüche 1 bis 3,
**dadurch gekennzeichnet, dass**
als Polyamin N,N-Bis(3-aminopropyl)methylamin eingesetzt wird.

5. Verfahren nach einem der Ansprüche 1 bis 4,
**dadurch gekennzeichnet, dass**
als sekundäres Monoamin Di-n-butylamin eingesetzt wird.

6. Verfahren nach einem der Ansprüche 1 bis 5,
**dadurch gekennzeichnet, dass** ein Amingemisch aus 50 bis 80 Gew.-% N,N-Bis(3-aminopropyl)methylamin und 50 bis 20 Gew.-% Di-n-butylamin eingesetzt wird.

7. Verfahren nach einem der Ansprüche 1 bis 6,
**dadurch gekennzeichnet, dass**
45 bis 75 Teile eines Polyurethan-Weichschaumstoffs in einem Gemisch aus
a) 20 bis 10 Teilen eines kurzkettigen Oligopropylenglykols der Molmasse 134 bis 600,
b) 1 bis 6 Teilen eines kurzkettigen Oligoethylenglykols der Molmasse 102 bis 600 und
d) 2 bis 8 Teilen eines Amingemisches aus einem aliphatischen Triamin und einem sekundären aliphatischen Amin im Verhältnis 2 : 8 bis 8 : 2
innerhalb von 90 Minuten bis 4 Stunden bei einer Temperatur zwischen 160 und 200°C umgesetzt werden und im zweiten Schritt mit
c) 12 bis 20 Teilen eines trifunktionellen Polyetheralkohols mit ca. 13 % Ethylenoxid und der Molmasse 3000 bis 6000 g/Mol im Gemisch mit 4 bis 8 Teilen eines difunktionellen Polypropylenglykols der Molmasse ca. 2000
versetzt und mindestens 15 Minuten bei der Reaktionstemperatur eingearbeitet werden.

8. Verfahren einem der Ansprüche 1 bis 6, **dadurch gekennzeichnet, dass**
55 bis 75 Teile eines Polyurethan-Formweichschaumstoffs (HR-Foam) in einem Gemisch aus
a) 26 bis 10 Teilen eines kurzkettigen Oligopropylenglykols der Molmasse 134 bis 600,
b) 6 bis 22 Teilen eines kurzkettigen Oligoethylenglykols der Molmasse 102 bis 600,
d) 2 bis 8 Teilen eines Polyamins ausgewählt aus Diethylentriamin, Dipropylentriamin, N-Methyl-dipropylentriamin (N,N-Bis(3-aminopropyl)methylamin), N-Methyl-diethylentriamin, Tripropylentetramin oder Triethylentetramin, deren Gemische oder im Gemisch mit einem sekundären Monoamin
innerhalb von 30 Minuten bis 4 Stunden bei einer Temperatur zwischen 170 und 220°C umgesetzt und in der zweiten Phase der Umsetzung
c) weitere 2 bis 20 Teile eines auf die Zusammensetzung des Polyurethans bezogenen ethylenoxidhaltigen Polyethertriols der Molmasse von 3000 bis 6000 g/Mol zugesetzt werden
und das Gemisch wenigstens 15 Minuten bei der Reaktionstemperatur gehalten wird.

9. Verfahren einem der Ansprüche 1 bis 6, **dadurch gekennzeichnet, dass**
10 bis 80 Teile eines viskoelastischen Polyurethanschaumstoffs in einem Gemisch aus
a) 26 bis 10 Teilen eines kurzkettigen Oligopropylenglykols der Molmasse 134 bis 600,
b) 3 bis 22 Teilen eines kurzkettigen Oligoethylenglykols der Molmasse 102 bis 600,
d) 2 bis 8 Teilen eines Polyamins ausgewählt aus Diethylentriamin, Dipropylentriamin, N-Methyl-dipropylentriamin (N,N-Bis(3-aminopropyl)methylamin), N-Methyl-diethylentriamin, Tripropylentetramin oder Triethylentetramin, deren Gemische oder im Gemisch mit einem sekundären Monoamin
innerhalb von 30 Minuten bis 4 Stunden bei einer Temperatur zwischen 160 und 220°C umgesetzt und in der zweiten Phase der Umsetzung
c) weitere 2 bis 20 Teile eines auf die Zusammensetzung des Polyurethans bezogenen ethylenoxidfreien Polyethertriols der Molmasse von 3000 bis 6000 g/Mol zugesetzt werden
und das Gemisch wenigstens 15 Minuten bei der Reaktionstemperatur gehalten wird.

10. Polyharnstoff-Dispersionspolyole
enthaltend
a) ein niedermolekulares Glykol mit einer Oberflächenspannung von 33-34 mN/m, welches ein kurzkettiges Oligopropylenglykol der Molmasse 134 bis 600 ist,
b) ein niedermolekulares Glykol mit einer Oberflächenspannung von 43-44 mN/m, welches ein kurzkettiges Oligoethylenglykol der Molmasse 102 bis 600 ist,
c) hochmolekulare Diol(e) und/oder Triole mit einer Oberflächenspannung von 32-35 mN/m, welche Copolyetherdiole und/oder Polyethertriole mit statistisch verteilten Ethylenoxidblöcken, mit internen Ethylenoxidblöcken sowie mit Ethylenoxidendblöcken sind, wobei deren Molmasse bei 3000 bis 6000 g/Mol liegt,
d) Oligo- oder Polyharnstoffe mit Teilchendurchmessern zwischen 20 nm und 1000 nm und
e) ggf. Katalysatoren und/oder Stabilisatoren aus den Polyurethan-Polyharnstoffen.

11. Polyharnstoff-Dispersionspolyole nach Anspruch 10,
**dadurch gekennzeichnet, dass** sie enthalten
a) 5 bis 25 Gew.-% des niedermolekularen Glykols mit der Oberflächenspannung von 33-34 mN/m, vorzugsweise Dipropylenglykol,
b) 5 bis 25 Gew.-% des niedermolekularen Glykols mit der Oberflächenspannung von 43-44 mN/m, vorzugsweise Diethylenglykol,
c) 5 bis 50 Gew.-% des hochmolekularen Diols und/oder Triols mit der Oberflächenspannung von 32-35 mN/m,
d) 2 bis 30 Gew.-% an Oligo- oder Polyharnstoffen mit Teilchendurchmessern zwischen 20 nm und 1000 nm und
e) bis zu 6 Gew.-% an Katalysatoren und/oder Stabilisatoren aus den Polyurethan-Polyharnstoffen.

12. Verwendung eines Polyharnstoff-Nanodispersionspolyol gemäß einem der Ansprüche 1 bis 11 zur Herstellung von Polyurethan-Beschichtungen, Polyurethan-Folien, Polyurethans-Vergussmassen, Polyurethan-Gelen, halbharten Polyurethanen oder -Schaumstoffen.

## Claims

1. A method for the manufacture of polyurea nanodispersion polyols by depolymerizing polyurethanes, **characterized in that** polyurethane-polyureas are solvolysed in a mixture formed by diols and/or triols in the presence of amines at temperatures of 160°C to 250°C, wherein 10% to 80% by weight of polyurethane-polyureas with respect to the total mixture are depolymerized in one step or in two steps in a mixture formed by
a) low molecular weight glycol with a surface tension of 33-34 mN/m, which is a short-chain oligopropylene glycol with a molecular weight of 134 to 600,
b) low molecular weight glycol with a surface tension of 43-44 mN/m, which is a short-chain oligoethylene glycol with a molecular weight of 102 to 600,
c) high molecular weight diol and/or high molecular weight triol with a surface tension of 32-35 mN/m, which are copolyether diols and/or polyether triols with randomly distributed ethylene oxide blocks, with internal ethylene oxide blocks as well as with terminal ethylene oxide blocks, wherein their molecular weight is in the range 3000 to 6000 g/mol,
d) polyamine selected from diethylene triamine, dipropylene triamine, N-methyl dipropylene triamine (N,N-bis(3-aminopropyl)methylamine), N-methyl diethylene triamine, tripropylene tetramine or triethylene tetramine, and mixtures thereof or as a mixture with a secondary monoamine.

2. The method as claimed in claim 1, **characterized in that** the short-chain oligopropylene glycol with a molecular weight of 134 to 600 is dipropylene glycol.

3. The method as claimed in claim 1 or claim 2,
**characterized in that** the short-chain oligoethylene glycol with a molecular weight of 102 to 600 is diethylene glycol.

4. The method as claimed in one of claims 1 to 3,
**characterized in that**
the polyamine employed is N,N-bis(3-aminopropyl)methylamine.

5. The method as claimed in one of claims 1 to 4,
**characterized in that**
the secondary monoamine employed is di-n-butylamine.

6. The method as claimed in one of claims 1 to 5,
**characterized in that** an amine mixture formed by 50% to 80% by weight of N,N-bis(3-aminopropyl)methylamine and 50% to 20% by weight of di-n-butylamine is employed.

7. The method as claimed in one of claims 1 to 6,
**characterized in that**
45 to 75 parts of a flexible polyurethane foam is reacted in a mixture formed by
a) 20 to 10 parts of a short-chain oligopropylene glycol with a molecular weight of 134 to 600,
b) 1 to 6 parts of a short-chain oligoethylene glycol with a molecular weight of 102 to 600, and
d) 2 to 8 parts of an amine mixture formed by an aliphatic triamine and a secondary aliphatic amine in a ratio of 2:8 to 8:2,
within 90 minutes to 4 hours at a temperature between 160°C and 200°C, and in a second step is supplemented with
c) 12 to 20 parts of a trifunctional polyether alcohol with approximately 13% ethylene oxide and a molecular weight of 3000 to 6000 g/mol mixed with 4 to 8 parts of a bifunctional polypropylene glycol with a molecular weight of approximately 2000
and incorporated for at least 15 minutes at the reaction temperature.

8. The method as claimed in one of claims 1 to 6,
**characterized in that**
55 to 75 parts of a moulded flexible polyurethane foam (HR foam) is reacted in a mixture formed by
a) 26 to 10 parts of a short-chain oligopropylene glycol with a molecular weight of 134 to 600,
b) 6 to 22 parts of a short-chain oligoethylene glycol with a molecular weight of 102 to 600,
d) 2 to 8 parts of a polyamine selected from diethylene triamine, dipropylene triamine, N-methyl dipropylene triamine (N,N-bis(3-aminopropyl)methylamine), N-methyl diethylene triamine, tripropylene tetramine or triethylene tetramine, and mixtures thereof or as a mixture with a secondary monoamine,
within 30 minutes to 4 hours at a temperature between 170°C and 220°C, and in the second phase of the reaction,
c) a further 2 to 20 parts of an ethylene oxide-containing polyether triol with a molecular weight of 3000 to 6000 g/mol with respect to the polyurethane composition is added,
and the mixture is maintained at the reaction temperature for at least 15 minutes.

9. The method as claimed in one of claims 1 to 6, **characterized in that**
10 to 80 parts of a viscoelastic polyurethane foam is reacted in a mixture formed by
a) 26 to 10 parts of a short-chain oligopropylene glycol with a molecular weight of 134 to 600,
b) 3 to 22 parts of a short-chain oligoethylene glycol with a molecular weight of 102 to 600,
d) 2 to 8 parts of a polyamine selected from diethylene triamine, dipropylene triamine, N-methyl dipropylene triamine (N,N-bis(3-aminopropyl)methylamine), N-methyl diethylene triamine, tripropylene tetramine or triethylene tetramine, and mixtures thereof or as a mixture with a secondary monoamine,
within 30 minutes to 4 hours at a temperature between 160°C and 220°C, and in the second phase of the reaction
c) a further 2 to 20 parts of an ethylene oxide-free polyether triol with a molecular weight of 3000 to 6000 g/mol with respect to the polyurethane composition is added
and the mixture is maintained at the reaction temperature for at least 15 minutes.

10. Polyurea dispersion polyols
containing
a) a low molecular weight glycol with a surface tension of 33-34 mN/m, which is a short-chain oligopropylene glycol with a molecular weight of 134 to 600,
b) a low molecular weight glycol with a surface tension of 43-44 mN/m, which is a short-chain oligoethylene glycol with a molecular weight of 102 to 600,
c) high molecular weight diol(s) and/or triols with a surface tension of 32-35 mN/m, which are copolyether diols and/or polyether triols with randomly distributed ethylene oxide blocks, with internal ethylene oxide blocks as well as with terminal ethylene oxide blocks, wherein their molecular weight is in the range 3000 to 6000 g/mol,
d) oligo- or poly-ureas with particle diameters between 20 nm and 1000 nm, and
e) if applicable, catalysts and/or stabilizers from the polyurethane-polyureas.

11. Polyurea dispersion polyols as claimed in claim 10, **characterized in that** they contain
a) 5% to 25% by weight of the low molecular weight glycol with the surface tension of 33-34 mN/m, preferably dipropylene glycol,
b) 5% to 25% by weight of the low molecular weight glycol with the surface tension of 43-44 mN/m, preferably diethylene glycol,
c) 5% to 50% by weight of the high molecular weight diol and/or triol with the surface tension of 32-35 mN/m,
d) 2% to 30% by weight of oligo- or poly-ureas with particle diameters between 20 nm and 1000 nm, and
e) up to 6% by weight of catalysts and/or stabilizers from the polyurethane-polyureas.

12. Use of a polyurea nanodispersion polyol as claimed in one of claims 1 to 11 for the manufacture of polyurethane coatings, polyurethane films, polyurethane casting compounds, polyurethane gels, semi-rigid polyurethanes or foams.

## Revendications

1. Procédé de préparation de polyols mettant en nanodispersion de la polyurée, ladite préparation étant réalisée par dépolymérisation de polyuréthanes, **caractérisé en ce que** l'on met en oeuvre, dans un mélange de diols et/ou de triols en présence d'amines à des températures comprises entre 160 et 250 °C, une solvolyse de polyurées issues de polyuréthane, ladite dépolymérisation portant sur 10 à 80 % des polyurées issues de polyuréthane par rapport au mélange global et étant mise en oeuvre en une étape ou en deux étapes dans un mélange constitué
a) d'un glycol de faible masse moléculaire dont la tension superficielle est comprise entre 33 et 34 mN/m, s'agissant d'un oligopropylèneglycol à courte chaîne dont la masse moléculaire est comprise entre 134 et 600,
b) d'un glycol de faible masse moléculaire dont la tension superficielle est comprise entre 43 et 44 mN/m, s'agissant d'un oligoéthylèneglycol à courte chaîne dont la masse moléculaire est comprise entre 102 et 600,
c) d'un diol de masse moléculaire élevée et/ou d'un triol de masse moléculaire élevée dont la tension superficielle est comprise entre 32 et 35 mN/m, s'agissant de copolyétherdiols et/ou de polyéthertriols comportant des blocs d'oxyde d'éthylène à répartition statistique, des blocs d'oxyde d'éthylène internes ainsi que des blocs d'oxyde d'éthylène terminaux, leurs masse moléculaire étant comprise entre 3 000 et 6 000 g/mol,
d) d'une polyamine choisie parmi la diéthylènetriamine, la dipropylènetriamine, la N-méthyl-dipropylènetriamine, la (N,N-bis(3-aminopropyl)méthylamine), la N-méthyl-diéthylènetriamine, la tripropylènetétramine ou la triéthylènetétramine, les mélanges entre elles ou leurs mélanges avec une monoamine secondaire.

2. Procédé selon la revendication 1, **caractérisé en ce que** ledit oligopropylèneglycol à courte chaîne dont la masse moléculaire est comprise entre 134 et 600, est le dipropylèneglycol.

3. Procédé selon l'une des revendications 1 ou 2,
**caractérisé en ce que** ledit oligoéthylèneglycol à courte chaîne dont la masse moléculaire est comprise entre 102 et 600, est le diéthylèneglycol.

4. Procédé selon l'une des revendications 1 à 3,
**caractérisé en ce que**,
en tant que polyamine, on met en oeuvre la N,N-bis(3-aminopropyl)-méthylamine.

5. Procédé selon l'une des revendications 1 à 4,
**caractérisé en ce que**,
en tant que monoamine secondaire, on met en oeuvre la di-n-butylamine.

6. Procédé selon l'une des revendications 1 à 5,
**caractérisé en ce que** l'on met oeuvre un mélange d'amines constitué à 50 à 80 % en poids de N,N-bis(3-aminopropyl)méthylamine et à 50 à 20 % en poids de di-n-butylamine.

7. Procédé selon l'une des revendications 1 à 6,
**caractérisé en ce que**
l'on fait réagir 45 à 75 parts d'une mousse flexible de polyuréthane dans un mélange constitué de
a) 20 à 10 parts d'un oligopropylèneglycol à courte chaîne dont la masse moléculaire est comprise entre 134 et 600,
b) 1 à 6 parts d'un oligoéthylèneglycol à courte chaîne dont la masse moléculaire est comprise entre 102 et 600, et
d) 2 et 8 parts d'un mélange d'amines se composant d'une triamine aliphatique et d'une amine aliphatique secondaire selon un rapport compris entre 2 : 8 et 8 : 2
pendant 90 minutes à 4 heures à une température comprise entre 160 et 200 °C et l'on y ajoute, dans la deuxième étape,
c) 12 à 20 parts d'un alcool de polyéther trifonctionnel comportant environ 13 % d'oxyde d'éthylène et ayant une masse moléculaire comprise entre 3 000 et 6 000 g/mol, en mélange avec 4 à 8 parts d'un polypropylèneglycol difonctionnel d'une masse moléculaire d'environ 2 000,
pour ensuite l'incorporer pendant au moins 15 minutes à ladite température de réaction.

8. Procédé selon l'une des revendications 1 à 6,
**caractérisé en ce que**
l'on fait réagir 55 à 75 parts d'une mousse flexible moulée de polyuréthane (HR-Foam) dans un mélange constitué de
a) 26 à 10 parts d'un oligopropylèneglycol à courte chaîne dont la masse moléculaire est comprise entre 134 et 600,
b) 6 à 22 parts d'un oligoéthylèneglycol à courte chaîne dont la masse moléculaire est comprise entre 102 et 600,
d) 2 à 8 parts d'une polyamine choisie parmi la diéthylènetriamine, la dipropylènetriamine, la N-méthyl-dipropylènetriamine, la (N,N-bis(3-aminopropyl)méthylamine), la N-méthyl-diéthylènetriamine, la tripropylènetétramine ou la triéthylènetétramine, les mélanges entre elles ou leurs mélanges avec une monoamine secondaire
pendant 30 minutes à 4 heures à une température comprise entre 170 et 220 °C et l'on y ajoute, dans la deuxième étape de réaction,
c) encore 2 à 20 parts d'un polyéthertriol contenant de l'oxyde d'éthylène et correspondant à la composition du polyuréthane, sa masse moléculaire étant comprise entre 3 000 et 6 000 g/mol,
pour ensuite maintenir le mélange pendant au moins 15 minutes à ladite température de réaction.

9. Procédé selon l'une des revendications 1 à 6,
**caractérisé en ce que**
l'on fait réagir 10 à 80 parts d'une mousse de polyuréthane viscoélastique dans un mélange constitué de
a) 26 à 10 parts d'un oligopropylèneglycol à courte chaîne dont la masse moléculaire est comprise entre 134 et 600,
b) 3 à 22 parts d'un oligoéthylèneglycol à courte chaîne dont la masse moléculaire est comprise entre 102 et 600,
d) 2 à 8 parts d'une polyamine choisie parmi la diéthylènetriamine, la dipropylènetriamine, la N-méthyl-dipropylènetriamine, la (N,N-bis(3-aminopropyl)méthylamine), la N-méthyl-diéthylènetriamine, la tripropylènetétramine ou la triéthylènetétramine, les mélanges entre elles ou leurs mélanges avec une monoamine secondaire
pendant 30 minutes à 4 heures à une température comprise entre 160 et 220 °C et l'on y ajoute, dans la deuxième étape de réaction,
c) encore 2 à 20 parts d'un polyéthertriol exempt d'oxyde d'éthylène et correspondant à la composition du polyuréthane, sa masse moléculaire étant comprise entre 3 000 et 6 000 g/mol,
pour ensuite maintenir le mélange pendant au moins 15 minutes à ladite température de réaction.

10. Polyols mettant en dispersion de la polyurée, contenant
a) un glycol de faible masse moléculaire dont la tension superficielle est comprise entre 33 et 34 mN/m, s'agissant d'un oligopropylèneglycol à courte chaîne dont la masse moléculaire est comprise entre 134 et 600,
b) un glycol de faible masse moléculaire dont la tension superficielle est comprise entre 43 et 44 mN/m, s'agissant d'un oligoéthylèneglycol à courte chaîne dont la masse moléculaire est comprise entre 102 et 600,
c) un ou plusieurs diol(s) et/ou triols de masse moléculaire élevée dont la tension superficielle est comprise entre 32 et 35 mN/m, s'agissant de copolyétherdiols et/ou de polyéthertriols comportant des blocs d'oxyde d'éthylène à répartition statistique, des blocs d'oxyde d'éthylène internes ainsi que des blocs d'oxyde d'éthylène terminaux, leurs masse moléculaire étant comprise entre 3 000 et 6 000 g/mol,
d) des oligo- ou polyurées dont les diamètres de particule sont compris entre 20 nm et 1 000 nm et
e) le cas échéant, des catalyseurs et/ou agents stabilisants provenant des polyurées issues de polyuréthane.

11. Polyols mettant en dispersion de la polyurée selon la revendication 10, **caractérisés en ce qu'**ils contiennent
a) 5 à 25 % en poids dudit glycol de faible masse moléculaire dont la tension superficielle est comprise entre 33 et 34 mN/m, s'agissant préférentiellement de dipropylèneglycol,
b) 5 à 25 % en poids dudit glycol de faible masse moléculaire dont la tension superficielle est comprise entre 43 et 44 mN/m, s'agissant préférentiellement de diéthylèneglycol,
c) 5 à 50 % en poids dudit diol et/ou triol de masse moléculaire élevée dont la tension superficielle est comprise entre 32 et 35 mN/m,
d) 2 et 30 % en poids d'oligo- ou de polyurées dont les diamètres de particule sont compris entre 20 nm et 1 000 nm et
e) jusqu'à 6 % en poids de catalyseurs et/ou d'agents stabilisants provenant des polyurées issues de polyuréthane.

12. Utilisation d'un polyol mettant en nanodispersion de la polyurée selon l'une des revendications 1 à 11 pour fabriquer des revêtement de polyuréthane, des feuilles de polyuréthane, des masses de polyuréthane destinées à être coulées, des gels de polyuréthane, des polyuréthanes semi-rigides ou sous forme de mousses.
